(19) Europäisches Patentamt / European Patent Office / Office européen des brevets

(11) **EP 4 492 405 A1**

(12) **EUROPEAN PATENT APPLICATION**
published in accordance with Art. 153(4) EPC

(43) Date of publication:
**15.01.2025 Bulletin 2025/03**

(21) Application number: **23791848.7**

(22) Date of filing: **18.04.2023**

(51) International Patent Classification (IPC):
**H01B 1/10** (2006.01)    **H01B 1/06** (2006.01)
**H01M 10/052** (2010.01)    **H01M 10/0562** (2010.01)

(52) Cooperative Patent Classification (CPC):
**H01B 1/06; H01B 1/10; H01M 10/052;**
**H01M 10/0562;** Y02E 60/10

(86) International application number:
**PCT/JP2023/015430**

(87) International publication number:
**WO 2023/204200 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.04.2022 JP 2022069070**

(71) Applicant: **GS Yuasa International Ltd.**
**Kisshoin, Minami-ku,**
**Kyoto-shi, Kyoto 601-8520 (JP)**

(72) Inventor: **FUKUSHIMA Akihiro**
**Kyoto-shi, Kyoto 601-8520 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **SOLID ELECTROLYTE, POWER STORAGE ELEMENT, AND METHOD FOR PRODUCING SOLID ELECTROLYTE**

(57)    A solid electrolyte according to one aspect of the present invention is a solid electrolyte containing lithium, phosphorus, sulfur, aluminum, nitrogen, bromine, and iodine as constituent elements and having a crystal structure, wherein the solid electrolyte satisfies conditions (a), (b), or (c) below when a molar ratio of the lithium to the phosphorus is represented by $r_1$, a molar ratio of a sum of the bromine and the iodine to the phosphorus is represented by $r_2$, and a molar ratio of a sum of the bromine and the iodine to the nitrogen is represented by $r_3$.

$$(a)\ 3.00 \le r_1 - r_2 \le 3.60 \text{ and } 1.5 \le r_3 \le 100$$

$$(b)\ 2.80 \le r_1 - r_2 < 3.00 \text{ and } 2.0 \le r_3 \le 100$$

$$(c)\ 2.60 \le r_1 - r_2 < 2.80 \text{ and } 2.5 \le r_3 \le 100$$

**EP 4 492 405 A1**

Fig. 1

**Description**

TECHNICAL FIELD

The present invention relates to a solid electrolyte, an energy storage device, and a method for producing a solid electrolyte.

BACKGROUND ART

Nonaqueous electrolyte secondary batteries typified by lithium ion secondary batteries are often used for electronic devices such as personal computers and communication terminals, motor vehicles, and the like, because the batteries are high in energy density. The nonaqueous electrolyte secondary batteries generally include an electrode assembly having a pair of electrodes and a separator; a nonaqueous electrolyte; and a case that houses these electrodes and nonaqueous electrolyte, and are configured to allow charge transport ions to be transferred between the two electrodes for charge-discharge. In addition, capacitors such as lithium ion capacitors and electric double-layer capacitors are also widely in use as nonaqueous electrolyte energy storage devices other than the nonaqueous electrolyte secondary batteries.

In recent years, an energy storage device has been proposed in which a solid electrolyte such as a sulfide solid electrolyte is used as a nonaqueous electrolyte in place of a nonaqueous electrolyte solution in which an electrolyte salt is dissolved in a liquid such as an organic solvent. Patent Document 1 describes a sulfide solid electrolyte containing Li, P, S, and N and an element X (X is at least one element selected from the group consisting of Cl, Br, and I) as constituent elements and having a crystal structure.

PRIOR ART DOCUMENT

PATENT DOCUMENT

Patent Document 1: WO 2020/045634 A

SUMMARY OF THE INVENTION

PROBLEMS TO BE SOLVED BY THE INVENTION

It is known that a sulfide solid electrolyte containing Li, P, S, N and the element X as constituent elements generates a crystal phase having high ionic conductivity and having diffraction peaks at $2\theta = 19.9°$ and $29.3°$ in an X-ray diffraction diagram using CuKa rays. However, when a heat treatment temperature is increased in order to enhance the crystallinity of this crystal phase, the productivity of the solid electrolyte may be lowered.

The present invention has been made in view of the above circumstances, and an object of the present invention is to provide a solid electrolyte and an energy storage device capable of having improved productivity.

MEANS FOR SOLVING THE PROBLEMS

A solid electrolyte according to one aspect of the present invention is a solid electrolyte containing lithium, phosphorus, sulfur, aluminum, nitrogen, bromine, and iodine as constituent elements and having a crystal structure, in which the solid electrolyte satisfies conditions (a), (b), or (c) below when a molar ratio of the lithium to the phosphorus is represented by $r_1$, a molar ratio of a sum of the bromine and the iodine to the phosphorus is represented by $r_2$, and a molar ratio of a sum of the bromine and the iodine to the nitrogen is represented by $r_3$.

$$(a)\ 3.00 \leq r_1 - r_2 \leq 3.60 \text{ and } 1.5 \leq r_3 \leq 100$$

$$(b)\ 2.80 \leq r_1 - r_2 < 3.00 \text{ and } 2.0 \leq r_3 \leq 100$$

$$(c)\ 2.60 \leq r_1 - r_2 < 2.80 \text{ and } 2.5 \leq r_3 \leq 100$$

An energy storage device according to another aspect of the present invention contains the solid electrolyte.
A method for producing a solid electrolyte according to another aspect of the present invention includes the steps of: preparing a composition including lithium, phosphorus, sulfur, aluminum, nitrogen, bromine, and iodine as constituent elements; and treating the composition, in which the solid electrolyte satisfies conditions (a), (b), or (c) below when a molar ratio of the lithium to the phosphorus is represented by $r_1$, a molar ratio of a sum of the bromine and the iodine to the phosphorus is represented by $r_2$, and a molar ratio of a sum of the bromine and the iodine to the nitrogen is represented by $r_3$.

$$\text{(a)}\ 3.00 \leq r_1 - r_2 \leq 3.60 \text{ and } 1.5 \leq r_3 \leq 100$$

$$\text{(b)}\ 2.80 \leq r_1 - r_2 < 3.00 \text{ and } 2.0 \leq r_3 \leq 100$$

$$\text{(c)}\ 2.60 \leq r_1 - r_2 < 2.80 \text{ and } 2.5 \leq r_3 \leq 100$$

ADVANTAGES OF THE INVENTION

According to any one aspect of the present invention, it is possible to provide a solid electrolyte and an energy storage device capable of having improved productivity.

BRIEF DESCRIPTION OF THE DRAWINGS

Fig. 1 is a schematic cross-sectional view of an all-solid-state battery as an embodiment of an energy storage device of the present invention.
Fig. 2 is a schematic view illustrating an energy storage apparatus composed of a plurality of assembled energy storage devices according to an embodiment of the present invention.

MODE FOR CARRYING OUT THE INVENTION

First, the outline of a solid electrolyte disclosed in the present specification will be described.
[1] A solid electrolyte according to one aspect of the present invention is a solid electrolyte containing lithium, phosphorus, sulfur, aluminum, nitrogen, bromine, and iodine as constituent elements and having a crystal structure, in which the solid electrolyte satisfies conditions (a), (b), or (c) below when a molar ratio of the lithium to the phosphorus is represented by $r_1$, a molar ratio of a sum of the bromine and the iodine to the phosphorus is represented by $r_2$, and a molar ratio of a sum of the bromine and the iodine to the nitrogen is represented by $r_3$.

$$\text{(a)}\ 3.00 \leq r_1 - r_2 \leq 3.60 \text{ and } 1.5 \leq r_3 \leq 100$$

$$\text{(b)}\ 2.80 \leq r_1 - r_2 < 3.00 \text{ and } 2.0 \leq r_3 \leq 100$$

$$\text{(c)}\ 2.60 \leq r_1 - r_2 < 2.80 \text{ and } 2.5 \leq r_3 \leq 100$$

The solid electrolyte according to [1] can have improved productivity. More specifically, in the solid electrolyte according to [1], the precipitation temperature of a crystal phase having high ionic conductivity and precipitated by a heat treatment is low. When the heat treatment is performed at the time of producing the solid electrolyte according to [1], a crystal phase (hereinafter, also referred to as high ion conduction phase (HICP)) having high ionic conductivity and having diffraction peaks at $2\theta = 19.9°$ and $29.3°$ in an X-ray diffraction diagram using CuKa rays can be precipitated. It is considered that HICP undergoes a phase transition to a crystal phase (hereinafter, also referred to as low ion conduction phase (LICP)) having diffraction peaks at diffraction angles $2\theta = 21.0°$ and $28.0°$ in an X-ray diffraction diagram using CuKa rays when a heat treatment temperature is increased, and undergoes a phase transition to $\beta\text{-}Li_3PS_4$ or the like when the heat treatment temperature is further increased. Among HICP, LICP, and $\beta\text{-}Li_3PS_4$, HICP and LICP have relatively high ionic conductivity, and $\beta\text{-}Li_3PS_4$ has low ionic conductivity. Among HICP, LICP, and $\beta\text{-}Li_3PS_4$, HICP has the highest ionic conductivity. Therefore, the heat treatment temperature needs to be controlled within a temperature range in which the generation of HICP or LICP (hereinafter, also referred to as HICP or the like) is promoted and $\beta$-Li$_3$PS$_4$ is hardly generated. Therefore, since the precipitation temperature of the crystal phase having high ionic conductivity such as HICP is low, the heat treatment temperature can be lowered, whereby the productivity can be improved.

The reason why the precipitation temperature of HICP or the like in the solid electrolyte described in the above [1] is low is not clear, but the following reasons are presumed. According to findings by the inventors, in the conventional solid electrolyte, the precipitation temperature of HICP or the like increases as a nitrogen content increases. Meanwhile, since bromine and iodine contribute to the formation of HICP or the like, it is considered that HICP or the like is more easily formed by containing both bromine and iodine. Therefore, the solid electrolyte described in the above [1] contains both bromine and iodine in a relatively large amount, and the molar ratio of the sum of bromine and iodine to nitrogen is within an appropriate range, so that the deposition temperature of HICP or the like can be effectively reduced. It is considered that the formation of HICP or the like is promoted also by containing a certain amount or more of lithium that is considered not to be bonded to bromine and iodine. Therefore, it is presumed that bromine and iodine and the lithium act to synergistically lower the deposition temperature of HICP or the like by controlling the molar ratio of the constituent elements of the solid electrolyte within the above range.

[2] In the solid electrolyte according to the above [1], a molar ratio of the nitrogen to the phosphorus may be 0.01 or more and 0.45 or less. As described above, in the solid electrolyte according to the above [2], the molar ratio of the nitrogen to the phosphorus is controlled within the above range, whereby a route advantageous for lithium ion conduction is formed in the crystal structure, so that the ionic conductivity can be enhanced.

[3] The solid electrolyte according to the above [1] or [2] may be represented by formula 1 below.

$$\mathrm{Li}_a\mathrm{PAl}_b\mathrm{S}_c\mathrm{N}_d\mathrm{Br}_e\mathrm{I}_f \cdots \qquad 1$$

In the above formula 1, a, b, c, d, e, and f are numerical values that give a stoichiometric ratio, a is a numerical value satisfying $3.00 < a < 5.30$, b is a numerical value satisfying $0.00 < b < 0.40$, c is a numerical value satisfying $3.50 < c < 4.20$, d is a numerical value satisfying $0.00 < d < 0.60$, e is a numerical value satisfying $0.00 < e < 2.20$, and f is a numerical value satisfying $0.00 < f < 2.20$. As described above, the solid electrolyte described in the above [3] is represented by the above formula 1, so that the deposition temperature of HICP or the like can be easily lowered.

[4] The solid electrolyte according to any one of the above [1] to [3] may have a plurality of crystallization temperatures in a range of 150°C or higher and 400°C or lower, and when a lowest crystallization temperature among the plurality of crystallization temperatures is denoted by T1 [°C] and a highest crystallization temperature among the plurality of crystallization temperatures is denoted by T2 [°C], a difference {T2-T1} between the crystallization temperature T1 and the crystallization temperature T2 may be 50°C or higher. Here, the crystallization temperature T1 means the precipitation temperature of HICP or the like. In the solid electrolyte described in the above [4], LICP may be precipitated without precipitation of HICP during a heat treatment depending on the composition. Therefore, the crystallization temperature T1 means the precipitation temperature of HICP when HICP is precipitated, and means the precipitation temperature of LICP when HICP is not precipitated. The crystallization temperature T2 means the precipitation temperature or phase transition temperature of a crystal phase having low ionic conductivity other than $\beta$-Li$_3$PS$_4$ or $\beta$-Li$_3$PS$_4$. Therefore, when the difference {T2-T1} between the crystallization temperature T1 and the crystallization temperature T2 is 50°C or higher as described above, the thermal stability of HICP or the like can be enhanced.

[5] The solid electrolyte according to the above [1] to [4] may contain at least one of a crystal structure A having diffraction peaks at $2\theta = 19.9° \pm 0.5°$ and $29.3° \pm 0.5°$ in an X-ray diffraction diagram using CuK$\alpha$ rays, and a crystal structure B having diffraction peaks at diffraction angles $2\theta = 21.0 \pm 0.5°$ and $28.0 \pm 0.5°$ in the X-ray diffraction diagram. The crystal structure A means the crystal structure of HICP, and the crystal structure B means the crystal structure of LICP. Therefore, the solid electrolyte according to the above [5] contains at least one of the crystal structure A and the crystal structure B, so that the ionic conductivity can be further enhanced.

[6] The solid electrolyte according to the above [5] may contain the crystal structure A. The solid electrolyte according to the above [6] contains the crystal structure A, so that the ionic conductivity can be further enhanced.

[7] The solid electrolyte according to any one of the above [1] to [6] may have an ionic conductivity at 25°C of $2.0 \times 10^{-3}$ S/cm or more. The solid electrolyte according to the above [7] has an ionic conductivity at 25°C of $2.0 \times 10^{-3}$ S/cm or more, thereby making it possible to enhance the charge-discharge performance of the energy storage device including the solid electrolyte according to the above [7].

[8] An energy storage device according to another aspect of the present invention contains the solid electrolyte according to any one of the above [1] to [7].

Since the energy storage device according to the above [8] contains the solid electrolyte according to any one of the above [1] to [7], the energy storage device can have improved productivity.

[9] A method for producing a solid electrolyte according to another aspect of the present invention includes the steps of: preparing a composition including lithium, phosphorus, sulfur, aluminum, nitrogen, bromine, and iodine as constituent elements; and treating the composition, in which the solid electrolyte satisfies conditions (a), (b), or (c) below when a molar ratio of the lithium to the phosphorus is represented by $r_1$, a molar ratio of a sum of the bromine and the iodine to the phosphorus is represented by $r_2$, and a molar ratio of a sum of the bromine and the iodine to the nitrogen is represented by $r_3$.

$$\text{(a)}\ 3.00 \le r_1 - r_2 \le 3.60 \text{ and } 1.5 \le r_3 \le 100$$

$$\text{(b)}\ 2.80 \le r_1 - r_2 < 3.00 \text{ and } 2.0 \le r_3 \le 100$$

$$\text{(c)}\ 2.60 \le r_1 - r_2 < 2.80 \text{ and } 2.5 \le r_3 \le 100$$

The method for producing a solid electrolyte according to the above [9] can improve the productivity of the solid electrolyte.

In the present invention, it is to be noted that having a crystal structure can be confirmed by powder X-ray diffraction measurement. More specifically, "having the crystal structure" means that a peak derived from the crystal structure of the solid electrolyte is observed in an X-ray diffraction diagram obtained by powder X-ray diffraction measurement. The solid electrolyte may contain an amorphous part. The powder X-ray diffraction measurement is performed by the following procedure. An airtight sample holder for X-ray diffraction measurement is filled with a solid electrolyte powder to be measured in an argon atmosphere having a dew point of -50°C or lower. The powder X-ray diffraction measurement is performed by using an X-ray diffractometer ("MiniFlex II" from Rigaku Corporation). With a CuKa ray used as a radiation source, and at a tube voltage of 30 kV and a tube current of 15 mA, the diffracted X-ray is allowed to pass through a Kβ filter of 30 pm in thickness, and detected by a high-speed one-dimensional detector (model number: D/teX Ultra 2). The sampling width, scanning speed, divergence slit width, light receiving slit width, and scattering slit width are set to be respectively 0.01°, 5°/min, 0.625°, 13 mm (OPEN), and 8 mm. In the present invention, the "X-ray diffraction diagram using CuKa rays" means an X-ray diffraction diagram obtained by the above-described powder X-ray diffraction measurement. Furthermore, in the present invention, the "crystallization temperature" of the solid electrolyte is determined by measurement with a differential scanning calorimeter (DSC) according to the following procedure. In an argon atmosphere having a dew point of -50°C or lower, a sample powder to be measured (a solid electrolyte before the heat treatment of a composition or the like prepared in the method for producing a solid electrolyte) is put in an SUS sealed pan, and then sealed using a dedicated jig. Differential scanning calorimetry is performed using a DSC apparatus ("Thermo Plus DSC 8230" from Rigaku Corporation). The temperature range is from room temperature to 400°C, and the temperature raising rate is 10°C/min.

In the present invention, the ionic conductivity is determined by measuring an alternating-current impedance by the following method. Under an argon atmosphere with a dew point of -50°C or lower, 120 mg of a sample powder is put into a powder molder of 10 mm in inner diameter, and then subjected to uniaxial pressure molding at 50 MPa or less by using a hydraulic press. After pressure release, 120 mg of SUS316L powder as a current collector is put on an upper surface of the sample, and then subjected to uniaxial pressing at 50 MPa or less by using the hydraulic press again. Next, 120 mg of SUS316L powder as a current collector is put on a lower surface of the sample, and then subjected to uniaxial pressing at 360 MPa for 5 minutes to obtain a pellet for ionic conductivity measurement. This pellet for ionic conductivity measurement is inserted into an HS cell manufactured by Hohsen Corp. to measure the alternating-current impedance at a predetermined temperature. The measurement conditions are an applied voltage amplitude of 20 mV, a frequency range from 1 MHz to 100 mHz, and a measurement temperature of 25°C.

A solid electrolyte, a method for producing a solid electrolyte, an energy storage device, a method for producing an energy storage device, an energy storage apparatus according to an embodiment of the present invention, and other embodiments will be described in detail. The names of the respective constituent members (respective constituent elements) for use in the respective embodiments may be different from the names of the respective constituent members (respective elements) for use in the background art.

<Solid Electrolyte>

(Crystal Structure)

The solid electrolyte according to an embodiment of the present invention has a crystal structure. The solid electrolyte preferably contains at least one of a crystal structure (HICP) having diffraction peaks at $2\theta = 19.9° \pm 0.5°$ and $29.3° \pm 0.5°$ in an X-ray diffraction diagram using CuKa rays, and a crystal structure (LICP) having diffraction peaks at diffraction angles $2\theta = 21.0 \pm 0.5°$ and $28.0 \pm 0.5°$ in the X-ray diffraction diagram. The solid electrolyte more preferably contains HICP. When the solid electrolyte contains HICP or the like, good ion conductivity can be exhibited.

The solid electrolyte may have a crystal structure other than HICP and LICP. Examples of the crystal structure other than HICP and LICP include $\beta$-$Li_3PS_4$, LGPS type, argyrodite type, $Li_7P_3S_{11}$, and Thio-LISICON type. The solid electrolyte may include an amorphous portion.

In an embodiment of the solid electrolyte, in an X-ray diffraction diagram using CuKa rays, it is preferable that the contained amount of $\beta$-$Li_3PS_4$ having diffraction peaks at a diffraction angle $2\theta$ in a range of $17.5° \pm 0.5°$, a range of $18.1° \pm 0.5°$, a range of $29.1° \pm 0.5°$, a range of $29.9° \pm 0.5°$, and a range of $31.2° \pm 0.5°$ is relatively small as compared with HICP or the like. In such a case, the ionic conductivity of the solid electrolyte is further enhanced.

In an embodiment of the solid electrolyte, it is preferable that the amount of LICP contained is relatively smaller than that of HICP. In such a case, the ionic conductivity of the solid electrolyte is further enhanced.

In the solid electrolyte, in the X-ray diffraction diagram using CuKa rays, the lower limit of the intensity ratio $I_H/I_\beta$ of the diffraction peak intensity $I_H$ having a diffraction angle $2\theta$ derived from HICP in a range of $19.9° \pm 0.5°$ to the diffraction peak intensity $I_\beta$ having a diffraction angle $2\theta$ derived from $\beta$-$Li_3PS_4$ in a range of $17.5° \pm 0.5°$ is preferably 1, and more preferably 2. The intensity ratio $I_H/I_\beta$ is related to an abundance ratio between the HICP and the $\beta$-$Li_3PS_4$ contained in the solid electrolyte. The upper limit of the intensity ratio $I_H/I_\beta$ is not particularly limited. When $I_\beta$ is 0, the intensity ratio $I_H/I_\beta$ is infinite, and is included in 1 or more.

In the solid electrolyte, in the X-ray diffraction diagram using CuKa rays, the lower limit of the intensity ratio $I_L/I_\beta$ of the diffraction peak intensity $I_L$ having a diffraction angle $2\theta$ derived from LICP in a range of $21.0° \pm 0.5°$ to the above-described diffraction peak intensity $I_\beta$ is preferably 1, and more preferably 2. The intensity ratio $I_L/I_\beta$ is related to an abundance ratio between the LICP and the $\beta$-$Li_3PS_4$ contained in the solid electrolyte. The upper limit of the intensity ratio $I_L/I_\beta$ is not particularly limited. When $I_\beta$ is 0, the intensity ratio $I_L/I_\beta$ is infinite, and is included in 1 or more.

In the solid electrolyte, in the X-ray diffraction diagram using CuKa rays, the lower limit of the intensity ratio $I_H/I_L$ of the above-described diffraction peak intensity $I_H$ to the above-described diffraction peak intensity $I_L$ is preferably 1, and more preferably 2. The intensity ratio $I_H/I_L$ is related to an abundance ratio between the HICP and the LICP contained in the solid electrolyte. The upper limit of the intensity ratio $I_H/I_L$ is not particularly limited. When $I_L$ is 0, the intensity ratio $I_H/I_L$ is infinite, and is included in 1 or more.

The solid electrolyte has a plurality of crystallization temperatures in a range of 150°C or higher and 400°C or lower, and when a lowest crystallization temperature among the plurality of crystallization temperatures is denoted by T1 [°C] and a highest crystallization temperature among the plurality of crystallization temperatures is denoted by T2 [°C], the lower limit of a difference {T2-T1} between the crystallization temperature T1 and the crystallization temperature T2 is preferably 50°C, more preferably 60°C, still more preferably 70°C, and yet still more preferably 80°C. By setting the difference {T2-T1} between the temperature T1 and the temperature T2 to the above lower limit or more, the thermal stability of HICP or the like can be improved. The upper limit of the difference {T2-T1} between the temperature T1 and the temperature T2 is not particularly limited, but may be, for example, 150°C.

(Composition)

The solid electrolyte according to an embodiment of the present invention contains lithium, phosphorus, sulfur, aluminum, nitrogen, bromine, and iodine as constituent elements.

In an embodiment of the solid electrolyte, regarding the constituent elements of the solid electrolyte, when the molar ratio of lithium to phosphorus is $r_1$, and the molar ratio of a sum of bromine and iodine to phosphorus is $r_2$, the lower limit of n - $r_2$ is 2.60, preferably 2.75, and more preferably 2.90. Meanwhile, the upper limit of n - $r_2$ is 3.60, more preferably 3.40, and still more preferably 3.20. When $r_1$ - $r_2$ is less than the above lower limit, the ratio of lithium not bonded to bromine and iodine is not sufficient, so that HICP or the like is hardly deposited. In contrast, when $r_1$ - $r_2$ exceeds the above upper limit, the proportion of lithium is larger than a range suitable for forming HICP, so that HICP or the like is hardly deposited.

With regard to the constituent elements of the solid electrolyte, when $r_1$ - $r_2$ is 3.00 or more and less than 3.60, the lower limit of the molar ratio $r_3$ of the sum of bromine and iodine to nitrogen is 1.5, and preferably 1.6. Meanwhile, the upper limit of the molar ratio $r_3$ is 100, preferably 5.1, more preferably 3.0, and still more preferably 2.0. When the molar ratio $r_3$ is less than the lower limit, the ratio of bromine and iodine contributing to the formation of HICP or the like is small, and thus it is difficult to reduce the deposition temperature of HICP or the like. In contrast, when the molar ratio $r_3$ exceeds the above upper limit, the thermal stability of HICP or the like is deteriorated. The reason for this is not clear, but it is presumed that when the ratio of bromine and iodine exceeds a certain amount, bromine and iodine cannot be stably present in the crystal structure of HICP or the like, and therefore the disintegration of the crystal structure is promoted.

With regard to the constituent elements of the solid electrolyte, when $r_1$ - $r_2$ is 2.80 or more and less than 3.00, the lower limit of the molar ratio $r_3$ of the sum of bromine and iodine to nitrogen is 2.0, and preferably 2.1. Meanwhile, the upper limit of the molar ratio $r_3$ is 100, preferably 5.1, more preferably 3.0, and still more preferably 2.3. When the molar ratio $r_3$ is less than the lower limit, the ratio of bromine and iodine contributing to the formation of HICP or the like is small, and thus it is difficult to reduce the deposition temperature of HICP or the like. In contrast, when the molar ratio $r_3$ exceeds the above upper limit, the thermal stability of HICP or the like is deteriorated.

With regard to the constituent elements of the solid electrolyte, when $r_1 - r_2$ is 2.60 or more and less than 2.80, the lower limit of the molar ratio $r_3$ of the sum of bromine and iodine to nitrogen is 2.5, and preferably 2.6. Meanwhile, the upper limit of the molar ratio $r_3$ is 100, preferably 5.1, more preferably 3.0, and still more preferably 2.8. When the molar ratio $r_3$ is less than the lower limit, the ratio of bromine and iodine contributing to the formation of HICP or the like is small, and thus it is difficult to reduce the deposition temperature of HICP or the like. In contrast, when the molar ratio $r_3$ exceeds the above upper limit, the thermal stability of HICP or the like is deteriorated.

With respect to the constituent elements of the solid electrolyte, the lower limit of the molar ratio of nitrogen to phosphorus is preferably 0.01, more preferably 0.03, and still more preferably 0.05. Meanwhile, the upper limit of the molar ratio of nitrogen to phosphorus is preferably 0.45, more preferably 0.40, and still more preferably 0.38. By setting the molar ratio to the above lower limit or more and the above upper limit or less, a path advantageous for lithium ion conduction is formed in the crystal structure, so that the ionic conductivity can be enhanced.

With respect to the constituent elements of the solid electrolyte, the lower limit of the molar ratio ($r_1$) of lithium to phosphorus is preferably 2.50, more preferably 3.00, and still more preferably 3.50. Meanwhile, the upper limit of the molar ratio of lithium to phosphorus is preferably 5.50, more preferably 5.00, and still more preferably 4.50. By setting the molar ratio to the above lower limit or more and the above upper limit or less, the deposition temperature of HICP or the like can be easily lowered.

With respect to the constituent elements of the solid electrolyte, the lower limit of the molar ratio of sulfur to phosphorus is preferably 2.50, more preferably 3.00, and still more preferably 3.50. Meanwhile, the upper limit of the molar ratio of sulfur to phosphorus is preferably 5.00, more preferably 4.50, and still more preferably 4.00. By setting the molar ratio to the above lower limit or more and the above upper limit or less, the deposition temperature of HICP or the like can be more easily lowered.

With respect to the constituent elements of the solid electrolyte, the lower limit of the molar ratio of aluminum to phosphorus is preferably 0.005, more preferably 0.007, and still more preferably 0.010. Meanwhile, the upper limit of the molar ratio of aluminum to phosphorus is preferably 0.35, more preferably 0.30, and still more preferably 0.25. By setting the molar ratio to the above lower limit or more and the above upper limit or less, the deposition temperature of HICP or the like can be more easily lowered.

With respect to the constituent elements of the solid electrolyte, the lower limit of the molar ratio of bromine to phosphorus is preferably 0.10, more preferably 0.15, and still more preferably 0.20. Meanwhile, the upper limit of the molar ratio of bromine to phosphorus is preferably 1.70, more preferably 1.50, and still more preferably 1.30. By setting the molar ratio to the above lower limit or more and the above upper limit or less, the deposition temperature of HICP or the like can be more easily lowered.

With respect to the constituent elements of the solid electrolyte, the lower limit of the molar ratio of iodine to phosphorus is preferably 0.10, more preferably 0.15, and still more preferably 0.20. Meanwhile, the upper limit of the molar ratio of iodine to phosphorus is preferably 1.70, more preferably 1.50, and still more preferably 1.30. By setting the molar ratio to the above lower limit or more and the above upper limit or less, the deposition temperature of HICP or the like can be more easily lowered.

With regard to the constituent elements of the solid electrolyte, the lower limit of the molar ratio of the sum of bromine and iodine to phosphorus is preferably 0.30, more preferably 0.40, and still more preferably 0.50. Meanwhile, the upper limit of the molar ratio of the sum of bromine and iodine to phosphorus is preferably 2.10, more preferably 2.00, and still more preferably 1.90. By setting the molar ratio to the above lower limit or more and the above upper limit or less, the deposition temperature of HICP or the like can be more easily lowered.

With regard to the constituent elements of the solid electrolyte, from the viewpoint of enhancing the ionic conductivity, the molar ratio of nitrogen to phosphorus is preferably 0.01 or more and 0.45 or less, and the molar ratio of the sum of bromine and iodine to phosphorus is preferably 0.50 or more and 0.80 or less.

The solid electrolyte may further contain elements other than lithium, phosphorus, sulfur, aluminum, nitrogen, bromine, and iodine as constituent elements. Examples of the other elements include alkali metal elements other than lithium, and oxygen. The other elements include halogen elements other than bromine and iodine. However, the molar ratio of the sum of the above-mentioned other elements to phosphorus in the solid electrolyte may be, for example, preferably less than 0.1, and more preferably less than 0.01. The solid electrolyte may not substantially contain the other elements.

In an embodiment of the present invention, the solid electrolyte is preferably represented by formula 1 below.

$$Li_aPAl_bS_cN_dBr_eI_f \cdots \qquad 1$$

In the above formula 1, a, b, c, d, e, and f are numerical values that give a stoichiometric ratio, a is a numerical value satisfying $3.00 < a < 5.30$, b is a numerical value satisfying $0.00 < b < 0.40$, c is a numerical value satisfying $3.50 < c < 4.20$, d is a numerical value satisfying $0.00 < d < 0.60$, e is a numerical value satisfying $0.00 < e < 2.20$, and f is a numerical value satisfying $0.00 < f < 2.20$. When the solid electrolyte is represented by the above formula 1 as described above, the deposition temperature of HICP or the like can be easily lowered.

In an embodiment of the present invention, the solid electrolyte is also preferably represented by the following formula 2.

$$(100 - z_1 - z_2)\ \{(1 - y)\ [xLi_2S\ (1 - x)\ P_2S_5]\ \ yLi_\alpha Al_\beta N\}\ z_1 LiBr\ z_2 LiI\ \cdots$$

$$2$$

In the above formula 2, x is a numerical value satisfying $0.50 \leq x \leq 0.80$, y is a numerical value satisfying $0 < y \leq 0.50$, and $z_1$ and $z_2$ are positive numerical values satisfying $5 \leq z_1 + z_2 \leq 55$. When the solid electrolyte is represented by the above formula 2 as described above, the deposition temperature of HICP or the like can be easily lowered. Note that the above formula 2 is a formula (composition formula) indicating the content ratio of each element of Li, P, Al, S, N, Br, and I, and does not specify a compound to be a raw material.

In the above formula 2, x more preferably satisfies $0.60 \leq x \leq 0.77$, and still more preferably satisfies $0.67 \leq x \leq 0.75$. y more preferably satisfies $0.005 \leq y < 0.35$, and still more preferably satisfies $0.010 \leq y < 0.30$. $z_1$ and $z_2$ more preferably satisfy $10 \leq z_1 + z_2 \leq 40$, and still more preferably $15 <\_ z_1 + z_2 \leq 30$.

In the above formula 2, the values of $\alpha$ and $\beta$ are not particularly limited, but may be, for example, $0.80 \leq \alpha \leq 3.0$ and $0.10 \leq \beta \leq 1.2$, or $\alpha = 1.5$ and $\beta = 0.5$. When the solid electrolyte has such a composition, the thermal stability of HICP or the like tends to be further improved.

(Physical Properties, Applications, and the like)

The lower limit of the ionic conductivity of the solid electrolyte at 25°C is preferably $2.0 \times 10^{-3}$ S/cm, more preferably $3.0 \times 10^{-3}$ S/cm, still more preferably $4.0 \times 10^{-3}$ S/cm, and still more preferably $5.0 \times 10^{-3}$ S/cm. When the ionic conductivity of the solid electrolyte at 25°C is equal to or more than the lower limit, the charge-discharge performance of the energy storage device including the solid electrolyte can be further improved. The upper limit of the ionic conductivity is not particularly limited, and is, for example, $5.0 \times 10^{-2}$ S/cm, and may be $2.5 \times 10^{-2}$ S/cm.

The shape of the solid electrolyte is not particularly limited, and is usually granular, massive, or the like. The solid electrolyte can be suitably used as an electrolyte of an energy storage device such as a lithium ion secondary battery, particularly a lithium ion energy storage device. Among them, the solid electrolyte can be particularly suitably used as an electrolyte of an all-solid-state battery. The solid electrolyte can be used for any of a positive electrode layer, an isolation layer, a negative electrode layer and the like in the energy storage device.

<Method for Producing Solid Electrolyte>

A method for producing a solid electrolyte according to an embodiment of the present invention includes the steps of: preparing a composition containing lithium, phosphorus, sulfur, aluminum, nitrogen, bromine, and iodine as constituent elements; and treating the composition.

(Preparing Step)

The composition used as a raw material in the production method is usually a mixture of two or more kinds of simple substances and/or compounds (hereinafter, also referred to as a compound or the like) containing at least one element of a lithium element, a phosphorus element, a sulfur element, an aluminum element, a nitrogen element, a bromine element, and an iodine element. Any compound or the like contained in the composition (mixture) may contain a lithium element, a phosphorus element, a sulfur element, an aluminum element, a nitrogen element, a bromine element, and an iodine element. One compound may contain two or more elements of a lithium element, a phosphorus element, a sulfur element, an aluminum element, a nitrogen element, a bromine element, and an iodine element. For example, examples of the compound containing a lithium element and a sulfur element include $Li_2S$ described later, examples of the compound containing a phosphorus element and a sulfur element include $P_2S_5$ described later, and examples of the compound containing a bromine element or an iodine element include LiBr and LiI described later. The composition may contain a compound or the like containing none of a lithium element, a phosphorus element, a sulfur element, an aluminum element, a nitrogen element, a bromine element, and an iodine element.

Examples of the compound or the like containing a lithium element include $Li_2S$, $Li_2O$, $Li_3N$, $Li_2CO_3$, and metallic lithium. In addition, the compound may be LiBr, LiI, $Li_{1.5}Al_{0.5}N$, or the like described later. Among these examples, $Li_2S$, LiBr, LiI, and $Li_{1.5}Al_{0.5}N$ are preferable. One of the compounds or the like containing a lithium element may be used alone, or two or more thereof may be used in mixture.

Examples of the compound or the like containing a phosphorus element include $P_2S_3$, $P_2S_5$, $P_2O_5$, $P_3N_5$, and elemental phosphorus. Among these examples, $P_2S_3$ and $P_2S_5$ are preferable, and $P_2S_5$ is more preferable. One of the compounds or the like containing a phosphorus element may be used alone, or two or more thereof may be used in mixture.

Examples of the compound or the like containing a sulfur element include $Li_2S$, $P_2S_3$, $P_2S_5$, $Al_2S_3$, $MgS$, $SiS_2$, and elemental sulfur. Among these examples, $Li_2S$, $P_2S_3$ and $P_2S_5$ are preferable, and $Li_2S$ and $P_2S_5$ are more preferable. One of the compounds or the like containing a sulfur element may be used alone, or two or more thereof may be used in mixture.

Examples of the compound containing a bromine element or an iodine element include LiBr, LiI, $Br_2$, and $I_2$. Among these examples, LiI and LiBr are preferable.

As the compound containing a nitrogen element and the like, a compound containing a nitrogen element and an aluminum element is preferable, and a compound represented by $Li_\alpha Al_\beta N_\gamma$ ($\alpha$, $\beta$, and $\gamma$ are numerical values that give a stoichiometric ratio) is more preferable. The compound represented by $Li_\alpha Al_\beta N_\gamma$ (hereinafter, also referred to as a Li-Al-N-containing compound) can be produced by the following procedure. First, LisN and a nitride of an aluminum element are prepared, and mixed in a mortar or the like. Next, a pellet of the mixed raw material compound is produced. Next, the pellet is heat-treated to produce a Li-Al-N-containing compound. It is to be noted that the means for preparing the Li-Al-N-containing compound is not limited thereto, and the Li-Al-N-containing compound may be prepared by other methods. For example, the raw materials of the Li-Al-N-containing compound may be two or more compounds containing any of a lithium element, an aluminum element, and a nitrogen element. The Li-Al-N-containing compound may be prepared by a mechanical milling treatment. As the Li-Al-N-containing compound, those industrially produced and sold may be prepared.

As the Li-Al-N-containing compound, a lithium composite nitride of an aluminum element is suitably used. As the lithium composite nitride of the aluminum element, $Li_{1.5}Al_{0.5}N$ is preferable from the viewpoint of easy availability and suppression of discharge of the nitrogen element to the outside of the system in the producing process of the solid electrolyte.

The composition may further contain a compound containing an aluminum element and a compound containing a nitrogen element. Examples of the compound containing an aluminum element include an oxide of an aluminum element, a sulfide of an aluminum element, a nitride of an aluminum element, and an alloy of an aluminum element and a lithium element. Examples of the sulfide of an aluminum element and the like include $Al_2S_3$ and $SiS_2$. Examples of the nitride of an aluminum element and the like include AlN, $Si_3N_4$, BN, and $Mg_3N_2$. One of the compounds containing an aluminum element may be used alone, or two or more thereof may be used in mixture.

For example, as an embodiment, the composition may be a composition containing $Li_2S$, $P_2S_5$, $Li_{1.5}Al_{0.5}N$, LiI, and LiBr.

The suitable content of each element in the composition is the same as the suitable content of each element in the sulfide solid electrolyte according to an embodiment of the present invention described above.

(Treatment Step)

In the production method, the composition is subjected to a treatment to obtain a solid electrolyte. Examples of the treatment include a method of obtaining an intermediate by mechanical milling or the like and then heating the obtained intermediate. It is to be noted that the means for obtaining the intermediate is not limited to the mechanical milling or the like, and a method other than the mechanical milling, for example, a melt quenching method may be employed.

The mechanical milling may be either dry or wet, but is preferably wet mechanical milling because the compounds and the like of the raw materials can be mixed more uniformly. Examples of the mechanical milling include a case-driven mill, a medium stirring mill, milling with a high-speed rotary crusher or the like, a roller mill, and a jet mill. Examples of the case-driven mill include a rotary mill, a vibration mill, and a planetary mill. Examples of the medium stirring mill include an attritor, and a bead mill. Examples of the milling with a high-speed rotary crusher include a hammer mill, and a pin mill. Among these examples, the case-driven mill is preferable, and the planetary mill is particularly preferable.

The intermediate obtained through the mechanical milling or the like may have a crystal structure, but is preferably so-called sulfide glass. The term "sulfide glass" means a sulfide solid electrolyte including an amorphous structure. When the intermediate is sulfide glass, a solid electrolyte can be obtained, which has only a small amount of less stable crystal phase such as $Li_2S$ and has respective elements highly dispersed.

As for the heating, the intermediate obtained by the mechanical milling or the like is subjected to heating (heat treatment). Thus, a solid electrolyte is obtained, in which at least a part of the intermediate is crystallized, preferably crystallized into a phase of HICP. The heating (heat treatment) may be performed under a reduced pressure atmosphere or an inert gas atmosphere.

The lower limit of the heating temperature is preferably T1 - 20 [°C], more preferably T1 [°C], and still more preferably T1 + 10 [°C], based on the crystallization temperature T1 at which HICP or the like precipitates. Meanwhile, the upper limit of the heating temperature is preferably T2 - 20 [°C], more preferably T2 - 30 [°C], and still more preferably T2 - 40 [°C] based on the crystallization temperature T2 at which $\beta$-$Li_3PS_4$ or the like precipitates. By setting the heating temperature to the above lower limit or higher, the precipitation of HICP or the like having high ionic conductivity can be promoted. By setting the heating temperature to the upper limit or lower, the phase transition to $\beta$-Li$_3$PS$_4$ or the like having low ionic conductivity can be suppressed.

<Energy Storage Device>

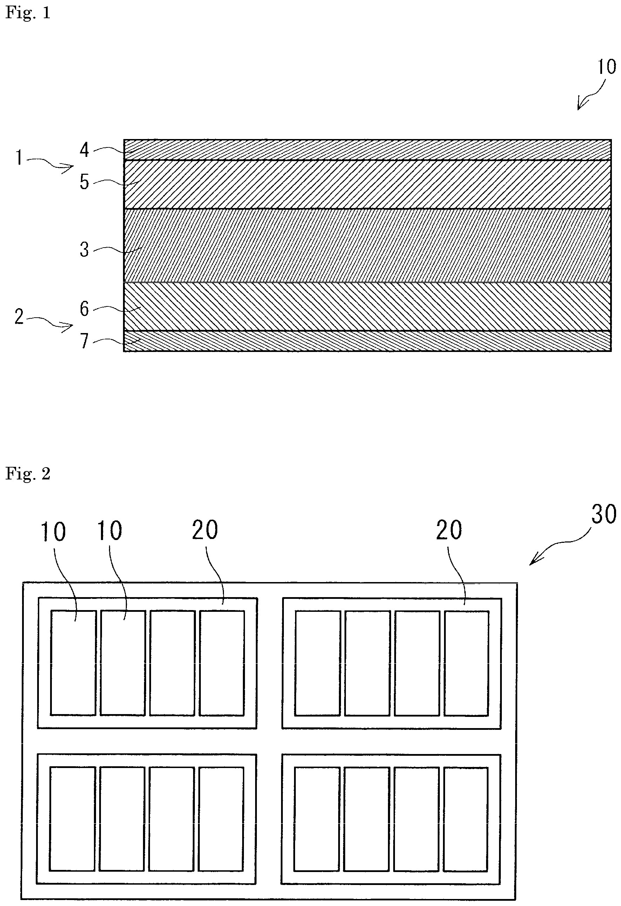

Hereinafter, as an embodiment of the energy storage device according to the present invention, an all-solid-state battery will be described as a specific example. An energy storage device 10 shown Fig. 1, which is an all-solid-state battery, is a secondary battery that has a positive electrode layer 1 and a negative electrode layer 2 disposed with an isolation layer 3 interposed therebetween. The positive electrode layer 1 includes a positive substrate 4 and a positive active material layer 5, and the positive substrate 4 serves as the outermost layer of the positive electrode layer 1. The negative electrode layer 2 includes a negative substrate 7 and a negative active material layer 6, and the negative substrate 7 serves as the outermost layer of the negative electrode layer 2. In the energy storage device 10 shown in Fig. 1, the negative active material layer 6, an isolation layer 3, the positive active material layer 5, and the positive substrate 4 are stacked in this order on the negative substrate 7.

The energy storage device 10 contains the solid electrolyte according to an embodiment of the present invention in at least one of the positive electrode layer 1, the negative electrode layer 2, and the isolation layer 3. More specifically, the solid electrolyte according to an embodiment of the present invention is contained in at least one of the positive active material layer 5, the negative active material layer 6, and the isolation layer 3. Since the energy storage device 10 contains the solid electrolyte capable of having improved productivity, the productivity of the energy storage device can be improved.

The energy storage device 10 may also use a solid electrolyte other than the solid electrolyte according to an embodiment of the present invention. Examples of another solid electrolyte include a sulfide solid electrolyte, an oxide solid electrolyte, a dry polymer electrolyte, a gel polymer electrolyte, and a pseudo solid electrolyte other than the solid electrolyte according to an embodiment of the present invention, and among them, a sulfide solid electrolyte is preferable. In addition, one layer in the energy storage device 10 may contain therein multiple different types of solid electrolytes, or the energy storage device 10 may contain therein different solid electrolytes for each of the layers.

Examples of the sulfide solid electrolyte other than the solid electrolyte according to an embodiment of the present invention include Li$_2$S-P$_2$S$_5$, Li$_2$S-P$_2$S$_5$-LiI, Li$_2$S-P$_2$S$_5$-LiCl, Li$_2$S-P$_2$S$_5$-LiBr, Li$_2$S-P$_2$S$_5$-Li$_2$O, Li$_2$S-P$_2$S$_5$-Li$_2$O-LiI, Li$_2$S-P$_2$S$_5$-Li$_3$N, Li$_2$S-SiS$_2$, Li$_2$S-SiS$_2$-LiI, Li$_2$S-SiS$_2$-LiBr, Li$_2$S-SiS$_2$-LiCl, Li$_2$S-SiS$_2$-B$_2$S$_3$-LiI, Li$_2$S-SiS$_2$-P$_2$S$_5$-LiI, Li$_2$S-B$_2$S$_3$, Li$_2$S-P$_2$S$_5$-Z$_m$S$_{2n}$ (provided that m and n are positive numbers, and Z is any of Ge, Zn, and Ga), Li$_2$SGeS$_2$, Li$_2$S-SiS$_2$-Li$_3$PO$_4$, Li$_2$S-SiS$_2$-Li$_x$MO$_y$ (provided that x and y are positive numbers, and M is any of P, Si, Ge, B, Al, Ga, and In), and Li$_{10}$GeP$_2$S$_{12}$.

[Positive Electrode Layer]

The positive electrode layer 1 includes the positive substrate 4, and the positive active material layer 5 stacked on the surface of the positive substrate 4. The positive electrode layer 1 may include an intermediate layer between the positive substrate 4 and the positive active material layer 5.

(Positive Substrate)

The positive substrate 4 has conductivity. Whether the positive substrate has "conductivity" or not is determined with the volume resistivity of $10^7$ $\Omega$ ·cm measured in accordance with JIS H-0505 (1975) as a threshold. As the material of the positive substrate 4, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate 4 include a foil, a deposited film, a mesh, and a porous material, and a foil is preferable from the viewpoint of cost. Accordingly, the positive substrate 4 is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate 4 is preferably 3 pm or more and 50 pm or less, more preferably 5 pm or more and 40 pm or less, still more preferably 8 pm or more and 30 pm or less, particularly preferably 10 pm or more and 25 pm or less. The average thickness of the positive substrate 4 falls within the range mentioned above, thereby making it possible to increase the energy density per volume of the energy storage device 10 while increasing the strength of the positive substrate 4. The term "average thicknesses" of the positive substrate 4 and of the negative substrate 7 described later each refer to a value obtained by dividing the mass of the substrate with a predetermined area by the true density and area of the substrate.

The intermediate layer is a layer disposed between the positive substrate 4 and the positive active material layer 5. The intermediate layer includes a conductive agent such as carbon particles, thereby reducing contact resistance between the positive substrate 4 and the positive active material layer 5. The configuration of the intermediate layer is not particularly limited, and includes, for example, a binder and a conductive agent.

(Positive Active Material Layer)

The positive active material layer 5 includes a positive active material. The positive active material layer 5 can be formed from a so-called positive composite including a positive active material. The positive active material layer 5 may contain a mixture or composite including a positive active material and a solid electrolyte and the like. The positive active material layer 5 contains optional components such as a conductive agent, a binder (binding agent), a thickener, and a filler, if necessary. One of, or two or more of these optional components may substantially fail to be contained in the positive active material layer 5.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an $\alpha$-NaFeO$_2$-type crystal structure, lithium-transition metal composite oxides that have a spinel-type crystal structure, polyanion compounds, chalcogenides, and sulfur. Examples of the lithium-transition metal composite oxides that have an $\alpha$-NaFeO$_2$-type crystal structure include Li[Li$_x$Ni$_{(1-x)}$]O$_2$ ($0 \leq x < 0.5$), Li[Li$_x$Ni$_\gamma$Co$_{(1-x-y)}$]O$_2$ ($0 \leq x < 0.5$, $0 < \gamma < 1$), Li[Li$_x$Co$_{(1-x)}$]O$_2$ ($0 < \_ x < 0.5$), Li[Li$_x$Ni$_y$Mn$_{(1-x-y)}$]O$_2$ ($0 < \_ x < 0.5$, $0 < \gamma < 1$), Li[Li$_x$Ni$_\gamma$Mn$_\beta$Co$_{(1-x-\gamma-\beta)}$]O$_2$ ($0 < \_ x < 0.5$, $0 < \gamma$, $0 < \beta$, $0.5 < \gamma + \beta < 1$), and Li[Li$_x$Ni$_\gamma$Co$_\beta$Al$_{(1-x-\gamma-\beta)}$]O$_2$ ($0 < \_ x < 0.5$, $0 < \gamma$, $0 < \beta$, $0.5 < \gamma + \beta < 1$). Examples of the lithium-transition metal composite oxides that have a spinel-type crystal structure include Li$_x$Mn$_2$O$_4$ and Li$_x$Ni$_\gamma$Mn$_{(2-\gamma)}$O$_4$. Examples of the polyanion compounds include LiFePO$_4$, LiMnPO$_4$, LiNiPO$_4$, LiCoPO$_4$, Li$_3$V$_2$(PO$_4$)$_3$, Li$_2$MnSiO$_4$, and Li$_2$CoPO$_4$F. Examples of the chalcogenides include titanium disulfide, molybdenum disulfide, and molybdenum dioxide. Some of atoms or polyanions in these materials may be substituted with atoms or anion species composed of other elements. The surfaces of these materials may be coated with other materials. In the positive active material layer 5, one of these materials may be used alone, or two or more thereof may be used in mixture.

The positive active material is typically particles (powder). The average particle size of the positive active material is preferably 0.1 pm or more and 20 pm or less, for example. By setting the average particle size of the positive active material to be equal to or more than the lower limit mentioned above, the positive active material is easily produced or handled. By setting the average particle size of the positive active material to be equal to or less than the upper limit mentioned above, the electron conductivity of the positive active material layer 5 is improved. It is to be noted that in the case of using a composite of the positive active material and another material, the average particle size of the composite is regarded as the average particle size of the positive active material. The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of a crushing method include a method in which a mortar, a ball mill, a sand mill, a vibratory ball mill, a planetary ball mill, a jet mill, a counter jet mill, a whirling airflow type jet mill, or a sieve or the like is used. At the time of crushing, wet-type crushing in coexistence of water or an organic solvent such as hexane can also be used. As a classification method, a sieve or a wind force classifier or the like is used based on the necessity both in dry manner and in wet manner.

The content of the positive active material in the positive active material layer 5 is preferably 10% by mass or more and 95% by mass or less, and this lower limit is more preferably 30% by mass, still more preferably 50% by mass. The content of the positive active material falls within the range mentioned above, thereby allowing the electric capacity of the energy storage device 10 to be further increased.

When the positive active material layer 5 contains a solid electrolyte, the content of the solid electrolyte is preferably 5% by mass or more and 90% by mass or less, more preferably 20% by mass or more and 70% by mass or less, and this upper limit may be still more preferably 50% by mass. The content of the solid electrolyte falls within the range mentioned above, thereby allowing the electric capacity of the energy storage device 10 to be further increased. When the solid electrolyte according to an embodiment of the present invention is used for the positive active material layer 5, the content of the solid electrolyte according to an embodiment of the present invention in an all solid electrolyte in the positive active material layer 5 is preferably 50% by mass or more, more preferably 70% by mass or more, still more preferably 90% by mass or more, and yet still more preferably substantially 100% by mass.

The mixture of the positive active material and the solid electrolyte and the like is a mixture prepared by mixing the positive active material, the solid electrolyte, and the like by mechanical milling or the like. For example, the mixture of the positive active material and the solid electrolyte and the like can be obtained by mixing a particulate positive active material, a particulate solid electrolyte, and the like. Examples of the composite of the positive active material and the solid electrolyte and the like include a composite that has a chemical or physical bond between the positive active material and the solid electrolyte and the like, and a composite obtained by mechanically combining the positive active material and the solid electrolyte and the like. The composite has, in one particle thereof, the positive active material and the solid electrolyte and the like, and examples of the composite include a composite in which the positive active material and the solid electrolyte and the like form an aggregated state, and a composite in which a film containing the solid electrolyte and the like is formed on at least a part of the surface of the positive active material.

The conductive agent is not particularly limited as long as it is a material exhibiting conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be mixed and used. These materials may be composited and then used. For example, a material in which carbon black and CNT are composited may be used. Among these, carbon black is preferable from the viewpoint of electron conductivity and coatability, and in particular, acetylene black is preferable.

The content of the conductive agent in the positive active material layer 5 is preferably 1% by mass or more and 10% by mass or less, more preferably 3% by mass or more and 9% by mass or less. The content of the conductive agent falls within the range mentioned above, thereby allowing the energy density of the energy storage device 10 to be increased.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as an ethylene-propylene-diene rubber (EPDM), sulfonated EPDM, a styrene butadiene rubber (SBR), and a fluororubber; and polysaccharide polymers.

The content of the binder in the positive active material layer 5 is preferably 1% by mass or more and 10% by mass or less, more preferably 3% by mass or more and 9% by mass or less. By setting the content of the binder in the above range, the active material can be stably held.

Examples of the thickener include polysaccharide polymers such as carboxymethylcellulose (CMC) and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer 5 may contain a typical nonmetal element such as B, N, P, F, Cl, Br, or I, a typical metal element such as Li, Na, Mg, Al, K, Ca, Zn, Ga, Ge, Sn, Sr, or Ba or a transition metal element such as Sc, Ti, V, Cr, Mn, Fe, Co, Ni, Cu, Mo, Zr, Nb, or W as a component other than the positive active material, the solid electrolyte, the conductive agent, the binder, the thickener, and the filler.

The average thickness of the positive active material layer 5 is preferably 30 pm or more and 1,000 pm or less, more preferably 60 pm or more and 500 pm or less. By setting the average thickness of the positive active material layer 5 to be equal to or more than the lower limit mentioned above, the energy storage device 10 with a high energy density can be obtained. The average thickness of the positive active material layer 5 is set to be equal to or less than the upper limit mentioned above, thereby allowing the size of the energy storage device 10 to be reduced. The average thickness of the positive active material layer 5 is regarded as the average value of thicknesses measured at any five points. The same applies to the average thicknesses of the negative active material layer 6 and isolation layer 3 described later.

[Negative Electrode Layer]

The negative electrode layer 2 includes a negative substrate 7 and a negative active material layer 6 disposed directly on the negative substrate 7 or over the negative substrate 7 with an intermediate layer interposed therebetween. The configuration of the intermediate layer is not particularly limited, and can be selected from, for example, the configurations exemplified for the positive electrode layer 1.

(Negative Substrate)

The negative substrate 7 has conductivity. As the material of the negative substrate 7, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate 7 include a foil, a deposited film, a mesh, and a porous material, and a foil is preferable from the viewpoint of cost. Accordingly, the negative substrate 7 is preferably a copper foil or a copper alloy foil. Examples of the copper foil include a rolled copper foil and an electrolytic copper foil.

The average thickness of the negative substrate 7 is preferably 2 pm or more and 35 pm or less, more preferably 3 pm or more and 30 pm or less, still more preferably 4 pm or more and 25 pm or less, and particularly preferably 5 pm or more and 20 pm or less. The average thickness of the negative substrate 7 falls within the range mentioned above, thereby allowing the energy density per volume of the energy storage device 10 to be increased while increasing the strength of the negative substrate 7.

(Negative Active Material Layer)

The negative active material layer 6 includes a negative active material. The negative active material layer 6 can be formed from a so-called negative composite including a negative active material. The negative active material layer 6 may contain a mixture or composite including a negative active material and a solid electrolyte and the like. The negative active material layer 6 includes optional components such as a conductive agent, a binder, a thickener, and a filler, if necessary. The types and suitable contents of the optional components in the negative active material layer 6 are the same as those of the optional components in the positive active material layer 5 described above. One of, or two or more of these optional components may substantially fail to be contained in the negative active material layer 6.

The negative active material layer 6 may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the solid electrolyte, the conductive agent, the binder, the thickener, and the filler.

The negative active material can be appropriately selected from known negative active materials. As the negative active material for a lithium ion secondary battery, a material capable of occluding and releasing lithium ions is usually used. Examples of the negative active material include metal Li; metals or metalloids such as Si and Sn; metal oxides or metalloid oxides such as oxides of Si, oxides of Ti, and oxides of Sn; titanium-containing oxides such as $Li_4Ti_5O_{12}$, $LiTiO_2$, and $TiNb_2O_7$; polyphosphoric acid compounds; silicon carbides; and carbon materials such as graphite and non-graphitic carbon (easily graphitizable carbon or hardly graphitizable carbon). Among these materials, graphite, and non-graphitic carbon are preferable. In the negative active material layer 6, one of these materials may be used singly, or two or more of these materials may be mixed and used.

The term "graphite" refers to a carbon material in which an average grid spacing ($d_{002}$) of the (002) plane determined by an X-ray diffraction method before charge-discharge or in a discharge state is 0.33 nm or more and less than 0.34 nm. Examples of the graphite include natural graphite and artificial graphite. Artificial graphite is preferable from the viewpoint that a material that has stable physical properties can be obtained.

The term "non-graphitic carbon" refers to a carbon material in which the average grid spacing ($d_{002}$) of the (002) plane determined by the X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from a petroleum pitch, a petroleum coke or a material derived from a petroleum coke, a plant-derived material, and an alcohol-derived material.

In this regard, the "discharged state" means a state discharged such that lithium ions that can be occluded and released in association with charge-discharge are sufficiently released from the carbon material as the negative active material. For example, the "discharged state" refers to a state where an open circuit voltage is 0.7 V or more in a monopolar battery in which a negative electrode containing a carbon material as a negative active material is used as a working electrode and metal Li is used as a counter electrode.

The term "hardly graphitizable carbon" refers to a carbon material in which the $d_{002}$ is 0.36 nm or more and 0.42 nm or less.

The term "easily graphitizable carbon" refers to a carbon material in which the $d_{002}$ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or greater than the above lower limit, the negative active material is easily produced or handled. By setting the average particle size of the negative active material to be equal to or less than the upper limit, the electron conductivity of the negative active material layer 6 is improved. A crusher, a classifier, or the like is used in order to obtain a powder with a predetermined particle size. The crushing method and the classification method can be selected from, for example, the methods exemplified for the positive electrode layer 1. When the negative active material is a metal such as metal Li, the negative active material may have the form of a foil.

The content of the negative active material in the negative active material layer 6 is preferably 10% by mass or more and 95% by mass or less, and this lower limit is more preferably 30% by mass, still more preferably 50% by mass. The content of the negative active material falls within the range mentioned above, thereby allowing the electric capacity of the energy storage device 10 to be further increased.

When the negative active material layer 6 contains a solid electrolyte, the content of the solid electrolyte is preferably 5% by mass or more and 90% by mass or less, more preferably 20% by mass or more and 70% by mass or less, and this upper limit may be still more preferably 50% by mass. The content of the solid electrolyte falls within the range mentioned above, thereby allowing the electric capacity of the energy storage device 10 to be further increased. When the solid electrolyte according to an embodiment of the present invention is used for the negative active material layer 6, the content of the solid electrolyte according to an embodiment of the present invention in an all solid electrolyte in the negative active material layer 6 is preferably 50% by mass or more, more preferably 70% by mass or more, still more preferably 90% by mass or more, and yet still more preferably substantially 100% by mass.

The mixture or composite of the negative active material and the solid electrolyte and the like can be obtained by replacing the positive active material with the negative active material in the above-described mixture or composite of the positive active material and the solid electrolyte and the like.

The average thickness of the negative active material layer 6 is preferably 30 pm or more and 1,000 pm or less, more preferably 60 pm or more and 500 pm or less. By setting the average thickness of the negative active material layer 6 to be equal to or more than the lower limit mentioned above, the energy storage device 10 with a high energy density can be obtained. The average thickness of the negative active material layer 6 is set to be equal to or less than the upper limit mentioned above, thereby allowing the size of the energy storage device 10 to be reduced.

[Isolation Layer]

The isolation layer 3 contains a solid electrolyte. As the solid electrolyte contained in the isolation layer 3, various solid electrolytes can be used in addition to the solid electrolyte according to an embodiment of the present invention described above, and among them, it is preferable to use a sulfide solid electrolyte. The content of the solid electrolyte in the isolation layer 3 is preferably 70% by mass or more, more preferably 90% by mass or more, still more preferably 99% by mass or more, and yet still more preferably substantially 100% by mass in some cases. When the solid electrolyte according to an embodiment of the present invention is used for the isolation layer 3, the content of the solid electrolyte according to an embodiment of the present invention in an all solid electrolyte in the isolation layer 3 is preferably 50% by mass or more, more preferably 70% by mass or more, still more preferably 90% by mass or more, and yet still more preferably substantially 100% by mass.

The isolation layer 3 may contain optional components such as a phosphoric acid compound, e.g., $Li_3PO_4$, an oxide, a halogen compound, a binder, a thickener, and a filler. The optional components such as a binder, a thickener, and a filler can be selected from the materials exemplified for the positive active material layer 5.

The average thickness of the isolation layer 3 is preferably 1 pm or more and 50 pm or less, more preferably 3 pm or more and 20 pm or less. The average thickness of the isolation layer 3 is set to be equal to or more than the lower limit mentioned above, thereby allowing the positive electrode layer 1 and the negative electrode layer 2 to be highly reliably insulated. The average thickness of the isolation layer 3 is equal to or smaller than the upper limit mentioned above, thereby allowing the energy density of the energy storage device 10 to be increased.

The energy storage device according to the present embodiment can be mounted as an energy storage unit (battery module) configured with a plurality of energy storage devices assembled, on power sources for automobiles such as electric vehicles (EV), hybrid vehicles (HEV), and plug-in hybrid vehicles (PHEV), power sources for electronic devices such as personal computers and communication terminals, power sources for power storage, or the like. In this case, the technique of the present invention may be applied to at least one energy storage device included in the energy storage unit.

Fig. 2 shows an example of an energy storage apparatus 30 obtained by assembling energy storage units 20 that each have two or more electrically connected energy storage devices 10 assembled. The energy storage apparatus 30 may include a busbar (not shown) that electrically connects two or more energy storage devices 10, a busbar (not shown) that electrically connects two or more energy storage units 20, and the like. The energy storage unit 20 or the energy storage apparatus 30 may include a state monitor (not illustrated) that monitors the conditions of one or more energy storage devices.

<Method for Producing Energy Storage Device>

The method for producing an energy storage device according to an embodiment of the present invention can be performed by a commonly known method, except that the solid electrolyte according to an embodiment of the present invention is used as a part of a solid electrolyte or the entire solid electrolyte for preparing at least one of the positive electrode layer, the isolation layer, and the negative electrode layer. Specifically, the production method includes, for example, (1) preparing a positive composite, (2) preparing a material for an isolation layer, (3) preparing a negative composite, and (4) stacking a positive electrode layer, the isolation layer, and a negative electrode layer. Hereinafter, each of the steps will be described in detail.

(1) Step of preparing positive composite

In this step, a positive composite for forming the positive electrode layer (positive active material layer) is typically prepared. The method for preparing the positive composite is not particularly limited, and can be appropriately selected in accordance with the purpose. Examples thereof include a mechanical milling treatment of a material for the positive composite, compression molding of the positive active material, and sputtering with the use of a target material of for the positive active material. When the positive composite contains the mixture or composite including the positive active material and the solid electrolyte, this step can include mixing the positive active material and the solid electrolyte by using, for example, a mechanical milling method or the like to prepare the mixture or composite of the positive active material and the solid electrolyte.

(2) Step of preparing material for isolation layer

In this step, a material for isolation layer for forming the isolation layer is typically prepared. When the energy storage device is an all-solid-state battery, the material for isolation layer can be a solid electrolyte. The solid electrolyte as the material for isolation layer can be prepared by a conventionally known method. For example, predetermined materials can be subjected to a treatment by a mechanical milling method to obtain the solid electrolyte. The material for isolation layer may be prepared by heating predetermined materials to the melting temperature or higher by a melt quenching method to melt and mix both materials at a predetermined ratio, and quenching the melted mixture. Examples of other methods for synthesizing the material for isolation layer include a solid phase method of sealing under reduced pressure and then firing, a liquid phase method such as dissolution-precipitation, a gas phase method (PLD), and firing under an argon atmosphere after mechanical milling.

(3) Step of preparing negative composite

In this step, a negative composite for forming the negative electrode layer (negative active material layer) is typically prepared. The specific method for preparing the negative composite is the same as that for the positive composite. When the negative composite contains the mixture or composite including the negative active material and the solid electrolyte, this step can include mixing the negative active material and the solid electrolyte by using, for example, a mechanical milling method or the like to prepare the mixture or composite of the negative active material and the solid electrolyte.

(4) Stacking step

In this step, for example, a positive electrode layer including a positive substrate and a positive active material layer, an isolation layer, and a negative electrode layer including a negative substrate and a negative active material layer are stacked. In this step, the positive electrode layer, the isolation layer, and the negative electrode layer may be sequentially formed in this order, or vice versa, and the order of forming the respective layers is not particularly limited. The positive electrode layer is formed, for example, by pressure-molding a positive substrate and the positive composite, the isolation layer is formed by pressure-molding the material for isolation layer, and the negative electrode layer is formed by pressure-molding a negative substrate and the negative composite. The positive electrode layer, the isolation layer, and the negative electrode layer may be stacked by pressure-molding the positive substrate, the positive composite, the material for isolation layer, the negative composite, and the negative substrate at a time. The positive electrode layer and the negative electrode layer may be each formed in advance, and stacked by pressure-molding together with the isolation layer.

[Other embodiments]

The nonaqueous electrolyte energy storage device according to the present invention is not limited to the embodiment described above, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

For example, the energy storage device according to the present invention may include other layers besides the positive electrode layer, the isolation layer, and the negative electrode layer. In addition, the energy storage device according to the present invention may include a liquid. Examples of such an energy storage device include an energy storage device in which voids of the positive active material layer 5, the isolation layer 3, the negative active material layer 6, and the like in the above-described energy storage device 10 are filled with a nonaqueous electrolyte solution or the like containing an Ionic liquid or the like. The energy storage device according to the present invention may be a capacitor or the like, in addition to the energy storage device to serve as a secondary battery.

<Examples>

Hereinafter, the present invention will be described in more detail with reference to Examples, but the present invention is not limited to the following Examples.

[Example 1]

A solid electrolyte satisfying a composition ratio described in Table 1 was synthesized by the following treatment. $Li_3N$ and AlN were weighed so as to reach a molar ratio of 1.2 : 1, mixed in a mortar, and then pelletized. Next, the pellet was subjected to a heat treatment at 750°C for 1 hour to prepare $Li_{1.5}Al_{0.5}N$. These steps were performed under an argon atmosphere having a dew point of -50°C or lower. The fact that the main phase of the prepared $Li_{1.5}Al_{0.5}N$ was $Li_{1.5}Al_{0.5}N$ was confirmed by X-ray diffraction measurement.

In a glove box in an argon atmosphere with a dew point of -50°C or lower, $Li_2S$ (99.98%, Aldrich), $P_2S_5$ (99%, manufactured by Aldrich), $Li_{1.5}Al_{0.5}N$, LiBr (99.999%, manufactured by Aldrich), and LiI (99.999%, manufactured by Aldrich) were weighed so as to reach molar ratios of 51.00 : 17.00 : 12.00 : 12.00 : 8.00, and then mixed in a mortar to prepare a composition material containing lithium, phosphorus, sulfur, aluminum, nitrogen, bromine, and iodine as constituent elements.

The composition was put into a closed 80 mL zirconia pot containing 160 g of zirconia balls of 4 mm in diameter. The composition was subjected to a mechanical milling treatment for 45 hours at a revolution of 510 rpm by a planetary ball mill (manufactured by FRITSCH, model number: Premium line PL-7) to obtain an intermediate.

The obtained intermediate was heated (heat-treated) at 200°C for 2 hours to obtain a solid electrolyte according to Example 1. The heat treatment temperature HT [°C] was set within a range of T1 - 20°C or higher and T2 - 20°C or lower based on the above-described crystallization temperature T1 [°C] and the above-described crystallization temperature T2 [°C]. The crystallization temperature T1 [°C] and the crystallization temperature T2 [°C] were determined by taking out a part of the intermediate after the mechanical milling treatment and performing DSC measurement by the above method.

[Examples 2 to 40 and Comparative Examples 1 to 14]

Respective solid electrolytes of Examples 2 to 40 and Comparative Examples 1 to 14 were obtained in the same manner as in Example 1 except that the composition ratios of the solid electrolytes were as described in Tables 1 to 4. Each heat treatment temperature HT [°C] was set in the same manner as in Example 1.

Regarding the constituent elements of the solid electrolytes of Examples 1 to 40 and Comparative Examples 1 to 14, $r_1 - r_2$ when the molar ratio of lithium to phosphorus is $r_1$ and the molar ratio of the sum of bromine and iodine to phosphorus is $r_2$, the molar ratio of lithium to phosphorus Li/P ($r_1$), the molar ratio of sulfur to phosphorus S/P, the molar ratio of aluminum to phosphorus Al/P, the molar ratio of nitrogen to phosphorus N/P, the molar ratio of bromine to phosphorus Br/P, the molar ratio of iodine to phosphorus I/P, and the molar ratio of the sum of bromine and iodine to nitrogen $r_3$ are shown in Tables 1 to 4. Regarding the solid electrolytes of Examples 1 to 40 and Comparative Examples 1 to 14, the crystallization temperature T1 [°C], the crystallization temperature T2 [°C], the difference between the crystallization temperatures T2 - T1 [°C], the heat treatment temperature HT [°C], and the crystal structures confirmed by X-ray diffraction diagrams obtained by the powder X-ray diffraction measurement performed by the above-described methods are shown in Tables 1 to 4.

[Evaluation]

The ionic conductivity ($\sigma_{25}$) at 25°C of each of the solid electrolytes of Examples 1 to 40 and Comparative Examples 1 to 14 was determined by measuring an alternating-current impedance by the above-described method using "VMP-300" manufactured by Bio-Logic Science Instruments. The measurement results are shown in Tables 1 to 4.

[Table 1]

| | $r_1$-$r_2$ | Li/P | S/P | Al/P | N/P | Br/P | I/P | $r_3$ | Crystallization temperature T1 [°C] | Crystallization temperature T2 [°C] | T2-T1 [°C] | Heat treatment temperature HT [°C] | Crystal structure | Ionic conductivity $\sigma_{25}$ [mS/cm] |
|---|---|---|---|---|---|---|---|---|---|---|---|---|---|---|
| Comparative Example 1 | 3.07 | 3.60 | 3.75 | 0.19 | 0.37 | 0.32 | 0.21 | 1.43 | 207 | 341 | 135 | 205 | HICP | 4.4 |
| Comparative Example 2 | 3.07 | 3.60 | 3.75 | 0.19 | 0.37 | 0.32 | 0.21 | 1.43 | 207 | 341 | 135 | 230 | HICP | 4.9 |
| Comparative Example 3 | 3.00 | 3.55 | 3.52 | 0.32 | 0.65 | 0.32 | 0.22 | 0.83 | 219 | 353 | 134 | 275 | HICP | 3.0 |
| Example 1 | 3.53 | 4.12 | 4.00 | 0.18 | 0.35 | 0.35 | 0.24 | 1.67 | 203 | 338 | 134 | 200 | HICP | 3.3 |
| Example 2 | 3.53 | 4.12 | 4.00 | 0.18 | 0.35 | 0.35 | 0.24 | 1.67 | 203 | 338 | 134 | 230 | HICP | 4.1 |
| Example 3 | 3.44 | 4.02 | 3.96 | 0.17 | 0.35 | 0.35 | 0.23 | 1.67 | 202 | 335 | 132 | 200 | HICP | 4.0 |
| Example 4 | 3.44 | 4.02 | 3.96 | 0.17 | 0.35 | 0.35 | 0.23 | 1.67 | 202 | 335 | 132 | 230 | HICP | 4.1 |
| Example 5 | 3.36 | 3.92 | 3.92 | 0.17 | 0.34 | 0.34 | 0.23 | 1.67 | 199 | 334 | 135 | 200 | HICP | 4.7 |
| Example 6 | 3.36 | 3.92 | 3.92 | 0.17 | 0.34 | 0.34 | 0.23 | 1.67 | 199 | 334 | 135 | 230 | HICP | 4.8 |
| Example 7 | 3.27 | 3.83 | 3.89 | 0.17 | 0.33 | 0.33 | 0.22 | 1.67 | 201 | 331 | 130 | 200 | HICP | 5.0 |
| Example 8 | 3.27 | 3.83 | 3.89 | 0.17 | 0.33 | 0.33 | 0.22 | 1.67 | 201 | 331 | 130 | 230 | HICP | 4.6 |
| Example 9 | 3.19 | 3.74 | 3.85 | 0.16 | 0.33 | 0.33 | 0.22 | 1.67 | 201 | 332 | 130 | 200 | HICP | 4.9 |
| Example 10 | 3.19 | 3.74 | 3.85 | 0.16 | 0.33 | 0.33 | 0.22 | 1.67 | 201 | 332 | 130 | 230 | HICP | 4.9 |

[Table 2]

| | $r_1$-$r_2$ | Li/P | S/P | Al/P | N/P | Br/P | I/P | $r_3$ | Crystallization temperature T1 [°C] | Crystallization temperature T2 [°C] | T2-T1 [°C] | Heat treatment temperature HT [°C] | Crystal structure | Ionic conductivity $\sigma_{25}$ [mS/cm] |
|---|---|---|---|---|---|---|---|---|---|---|---|---|---|---|
| Example 11 | 3.14 | 3.68 | 3.82 | 0.16 | 0.33 | 0.33 | 0.22 | 1.67 | 200 | 329 | 129 | 230 | HICP | 5.8 |
| Example 12 | 3.14 | 3.68 | 3.82 | 0.16 | 0.33 | 0.33 | 0.22 | 1.67 | 200 | 329 | 129 | 250 | HICP | 5.4 |
| Example 13 | 3.14 | 3.68 | 3.82 | 0.16 | 0.33 | 0.22 | 0.33 | 1.67 | 197 | 337 | 139 | 230 | HICP | 5.1 |
| Example 14 | 3.14 | 3.68 | 3.82 | 0.16 | 0.33 | 0.22 | 0.33 | 1.67 | 197 | 337 | 139 | 210 | HICP | 5.3 |
| Example 15 | 3.14 | 3.86 | 3.82 | 0.16 | 0.33 | 0.44 | 0.29 | 2.22 | 192 | 307 | 115 | 190 | HICP | 4.0 |
| Example 16 | 3.14 | 3.86 | 3.82 | 0.16 | 0.33 | 0.44 | 0.29 | 2.22 | 192 | 307 | 115 | 210 | HICP | 5.1 |
| Example 17 | 3.14 | 3.86 | 3.82 | 0.16 | 0.33 | 0.44 | 0.29 | 2.22 | 192 | 307 | 115 | 220 | HICP | 5.4 |
| Example 18 | 3.14 | 3.86 | 3.82 | 0.16 | 0.33 | 0.44 | 0.29 | 2.22 | 192 | 307 | 115 | 230 | HICP | 4.6 |
| Example 19 | 3.14 | 3.86 | 3.82 | 0.16 | 0.33 | 0.29 | 0.44 | 2.22 | 189 | 335 | 146 | 210 | HICP / LICP | 4.5 |
| Example 20 | 3.14 | 4.07 | 3.82 | 0.16 | 0.33 | 0.56 | 0.37 | 2.86 | 186 | 312 | 126 | 190 | HICP / LICP | 4.3 |
| Example 21 | 3.14 | 4.07 | 3.82 | 0.16 | 0.33 | 0.53 | 0.40 | 2.86 | 179 | 259 | 79 | 175 | HICP / LICP | 4.4 |
| Example 22 | 3.14 | 4.07 | 3.82 | 0.16 | 0.33 | 0.53 | 0.40 | 2.86 | 179 | 259 | 79 | 210 | HICP / LICP | 3.6 |

| | $r_1 - r_2$ | Li/P | S/P | Al/P | N/P | Br/P | I/P | $r_3$ | Crystallization temperature T1 [°C] | Crystallization temperature T2 [°C] | T2-T1 [°C] | Heat treatment temperature HT [°C] | Crystal structure | Ionic conductivity $\sigma_{25}$ [mS/cm] |
|---|---|---|---|---|---|---|---|---|---|---|---|---|---|---|
| Example 23 | 3.11 | 3.85 | 3.73 | 0.22 | 0.44 | 0.44 | 0.29 | 1.67 | 198 | 324 | 126 | 230 | HICP | 5.1 |
| Example 24 | 3.10 | 3.36 | 3.85 | 0.13 | 0.26 | 0.32 | 0.21 | 2.00 | 201 | 331 | 130 | 230 | HICP | 4.7 |
| Example 25 | 3.07 | 3.78 | 3.75 | 0.19 | 0.37 | 0.43 | 0.28 | 1.90 | 198 | 313 | 115 | 200 | HICP | 4.6 |
| Example 26 | 3.07 | 3.78 | 3.75 | 0.19 | 0.37 | 0.43 | 0.28 | 1.90 | 198 | 313 | 115 | 230 | HICP | 5.0 |
| Example 27 | 3.00 | 3.50 | 3.92 | 0.05 | 0.10 | 0.30 | 0.20 | 5.00 | 197 | 301 | 104 | 230 | HICP | 5.6 |
| Example 28 | 3.00 | 3.67 | 3.92 | 0.05 | 0.10 | 0.40 | 0.27 | 6.67 | 189 | 287 | 98 | 220 | HICP | 5.7 |
| Example 29 | 3.00 | 3.67 | 3.92 | 0.03 | 0.06 | 0.40 | 0.27 | 11.11 | 185 | 265 | 80 | 220 | HICP | 6.5 |
| Example 30 | 3.00 | 3.67 | 3.98 | 0.01 | 0.02 | 0.40 | 0.27 | 33.33 | 182 | 270 | 88 | 210 | HICP | 4.7 |

[Table 3]

| | $r_1$-$r_2$ | Li/P | S/P | Al/P | N/P | Br/P | I/P | $r_3$ | Crystallization temperature T2 [°C] | Crystallization temperature T2 [°C] | T2-T1 [°C] | Heat treatment temperature HT [°C] | Crystal structure | Ionic conductivity $\sigma_{25}$ [mS/cm] |
|---|---|---|---|---|---|---|---|---|---|---|---|---|---|---|
| Comparative Example 4 | 2.96 | 3.19 | 3.67 | 0.21 | 0.42 | 0.23 | 0.00 | 0.56 | 245 | 339 | 94 | 265 | HICP | 3.1 |
| Comparative Example 5 | 2.96 | 3.48 | 3.67 | 0.21 | 0.42 | 0.52 | 0.00 | 1.25 | 225 | 305 | 80 | 250 | HICP LiBr | 3.3 |
| Comparative Example 6 | 2.96 | 3.85 | 3.67 | 0.21 | 0.42 | 0.89 | 0.00 | 2.14 | 220 | 288 | 68 | 240 | HICP LiBr | 2.9 |
| Comparative Example 7 | 2.96 | 3.19 | 3.67 | 0.21 | 0.42 | 0.00 | 0.23 | 0.56 | 238 | 349 | 112 | 255 | HICP | 3.0 |
| Comparative Example 8 | 2.96 | 3.48 | 3.67 | 0.21 | 0.42 | 0.00 | 0.52 | 1.25 | 210 | 307 | 97 | 240 | HICP LICP | 1.7 |
| Comparative Example 9 | 2.96 | 3.48 | 3.67 | 0.21 | 0.42 | 0.31 | 0.21 | 1.25 | 213 | 336 | 124 | 255 | HICP | 4.7 |
| Comparative Example 10 | 2.96 | 3.65 | 3.67 | 0.21 | 0.42 | 0.42 | 0.28 | 1.67 | 204 | 327 | 123 | 215 | HICP LICP | 5.0 |
| Comparative Example 11 | 2.86 | 3.54 | 3.67 | 0.18 | 0.35 | 0.40 | 0.27 | 1.90 | 208 | 277 | 69 | 210 | HICP | 2.7 |
| Example 31 | 2.97 | 3.66 | 3.75 | 0.15 | 0.31 | 0.41 | 0.28 | 2.22 | 200 | 316 | 116 | 230 | HICP | 5.5 |
| Example 32 | 2.96 | 3.85 | 3.67 | 0.21 | 0.42 | 0.54 | 0.36 | 2.14 | 193 | 249 | 56 | 190 | HICP LICP | 2.4 |
| Example 33 | 2.96 | 3.85 | 3.67 | 0.21 | 0.42 | 0.51 | 0.39 | 2.14 | 190 | 318 | 128 | 190 | HICP LICP | 3.2 |
| Example 34 | 2.96 | 3.85 | 3.67 | 0.21 | 0.42 | 0.51 | 0.39 | 2.14 | 190 | 318 | 128 | 220 | HICP LICP | 3.3 |
| Example 35 | 2.96 | 4.08 | 3.67 | 0.21 | 0.42 | 0.67 | 0.45 | 2.69 | 190 | 252 | 62 | 185 | HICP LICP | 3.0 |
| Example 36 | 2.96 | 4.35 | 3.67 | 0.21 | 0.42 | 0.83 | 0.56 | 3.33 | 184 | 238 | 54 | 175 | HICP LICP | 2.2 |

(continued)

| | $r_1$-$r_2$ | Li/P | S/P | Al/P | N/P | Br/P | I/P | $r_3$ | Crystallization temperature T2 [°C] | Crystallization temperature T2 [°C] | T2-T1 [°C] | Heat treatment temperature HT [°C] | Crystal structure | Ionic conductivity $\sigma_{25}$ [mS/cm] |
|---|---|---|---|---|---|---|---|---|---|---|---|---|---|---|
| Example 37 | 2.96 | 4.66 | 3.67 | 0.21 | 0.42 | 1.02 | 0.68 | 4.09 | 183 | 239 | 55 | 175 | HICP LICP | 2.2 |
| Example 38 | 2.96 | 5.04 | 3.67 | 0.21 | 0.42 | 1.25 | 0.83 | 5.00 | 176 | 232 | 56 | 165 | LICP | 1.5 |
| Example 39 | 2.90 | 3.58 | 3.72 | 0.15 | 0.30 | 0.41 | 0.27 | 2.22 | 203 | 308 | 104 | 200 | HICP | 3.3 |

[Table 4]

| | $r_1$-$r_2$ | Li/P | S/P | Al/P | N/P | Br/P | I/P | $r_3$ | Crystallization temperature T1 [°C] | Crystallization temperature T2 [°C] | T2-T1 [°C] | Heat treatment temperature HT [°C] | Crystal structure | Ionic conductivity $\sigma_{25}$ [mS/cm] |
|---|---|---|---|---|---|---|---|---|---|---|---|---|---|---|
| Comparative Example 12 | 2.43 | 3.20 | 3.52 | 0.13 | 0.27 | 0.46 | 0.31 | 2.86 | 240 | 268 | 27 | 240 | LICP | 0.6 |
| Comparative Example 13 | 2.77 | 3.26 | 3.67 | 0.15 | 0.29 | 0.29 | 0.20 | 1.67 | 220 | 280 | 60 | 220 | HICP | 3.4 |
| Comparative Example 14 | 2.77 | 3.43 | 3.67 | 0.15 | 0.29 | 0.39 | 0.26 | 2.22 | 211 | 284 | 74 | 230 | HICP LICP | 3.2 |
| Example 40 | 2.77 | 3.61 | 3.67 | 0.15 | 0.29 | 0.50 | 0.34 | 2.86 | 201 | 291 | 90 | 200 | HICP LICP LiBr | 2.0 |

As shown in Tables 1 and 2, when $r_1$ - $r_2$ is 3.00 or more and 3.60 or less, Examples 1 to 30 in which $r_3$ is 1.5 or more and 100 or less have a crystallization temperature T1 lower than that in Comparative Examples 1 to 3 in which $r_3$ is less than 1.5. Examples 1 to 30 have a crystallization temperature T1 of 203°C or lower. Therefore, the productivity can be improved.

As shown in Table 3, when $r_1$ - $r_2$ is 2.80 or more and less than 3.00, Examples 31 to 39 in which $r_3$ is 2.0 or more and 100 or less have a crystallization temperature T1 lower than that in Comparative Examples 4 to 6 in which iodine is not contained, Comparative Examples 7 and 8 in which bromine is not contained, and Comparative Examples 9 to 11 in which $r_3$ is less than 2.0. Examples 31 to 39 have a crystallization temperature T1 of 203°C or lower. Therefore, the productivity can be improved.

As shown in Table 4, Example 40 in which $r_1$ - $r_2$ is 2.60 or more and less than 2.80 and $r_3$ is 2.5 or more and 100 or less has a lower crystallization temperature T1 than that in Comparative Example 12 in which $r_1$ - $r_2$ is less than 2.6, and Comparative Example 13 and Comparative Example 14 in which $r_1$ - $r_2$ is 2.6 or more and less than 2.8 and $r_3$ is less than 2.5. Example 40 has a crystallization temperature T1 of 203°C or lower. Therefore, the productivity can be improved.

The solid electrolyte according to the present invention is suitably used as a solid electrolyte for an energy storage device such as an all-solid-state battery.

DESCRIPTION OF REFERENCE SIGNS

1: Positive electrode layer
2: Negative electrode layer
3: Isolation layer
4: Positive substrate
5: Positive active material layer
6: Negative active material layer
7: Negative substrate
10: Energy storage device (all-solid-state battery)
20: Energy storage unit
30: Energy storage apparatus

**Claims**

1.  A solid electrolyte comprising lithium, phosphorus, sulfur, aluminum, nitrogen, bromine, and iodine as constituent elements and having a crystal structure,
    wherein the solid electrolyte satisfies conditions (a), (b), or (c) below when a molar ratio of the lithium to the phosphorus is represented by $r_1$, a molar ratio of a sum of the bromine and the iodine to the phosphorus is represented by $r_2$, and a molar ratio of a sum of the bromine and the iodine to the nitrogen is represented by $r_3$:

$$\text{(a) } 3.00 \leq r_1 - r_2 \leq 3.60 \text{ and } 1.5 \leq r_3 \leq 100;$$

$$\text{(b) } 2.80 \leq r_1 - r_2 < 3.00 \text{ and } 2.0 \leq r_3 \leq 100;$$

or

$$\text{(c) } 2.60 \leq r_1 - r_2 < 2.80 \text{ and } 2.5 \leq r_3 \leq 100.$$

2.  The solid electrolyte according to claim 1, wherein a molar ratio of the nitrogen to the phosphorus is 0.01 or more and 0.45 or less.

3.  The solid electrolyte according to claim 1 or 2, represented by formula 1 below:

    $\text{Li}_a\text{PAl}_b\text{S}_c\text{N}_d\text{Br}_e\text{I}_f \cdots$       1

    where in the above formula 1, a, b, c, d, e, and f are numerical values that give a stoichiometric ratio, a is a numerical value satisfying 3.00 < a < 5.30, b is a numerical value satisfying 0.00 < b < 0.40, c is a numerical value satisfying 3.50 < c < 4.20, d is a numerical value satisfying 0.00 < d < 0.60, e is a numerical value satisfying 0.00 < e < 2.20, and f is a numerical value satisfying 0.00 < f < 2.20.

4. The solid electrolyte according to claim 1 or 2, wherein the solid electrolyte has a plurality of crystallization temperatures in a range of 150°C or higher and 400°C or lower, and when a lowest crystallization temperature among the plurality of crystallization temperatures is denoted by T1 [°C] and a highest crystallization temperature among the plurality of crystallization temperatures is denoted by T2 [°C], a difference {T2-T1} between the crystallization temperature T1 and the crystallization temperature T2 is 50°C or higher.

5. The solid electrolyte according to claim 1 or 2, wherein the solid electrolyte contains at least one of a crystal structure A having diffraction peaks at $2\theta = 19.9° \pm 0.5°$ and $29.3° \pm 0.5°$ in an X-ray diffraction diagram using CuKa rays, and a crystal structure B having diffraction peaks at diffraction angles $2\theta = 21.0 \pm 0.5°$ and $28.0 \pm 0.5°$ in the X-ray diffraction diagram.

6. The solid electrolyte according to claim 5, wherein the solid electrolyte contains the crystal structure A.

7. The solid electrolyte according to claim 1 or 2, wherein the solid electrolyte has an ionic conductivity at 25°C of $2.0 \times 10^{-3}$ S/cm or more.

8. An energy storage device comprising the solid electrolyte according to claim 1 or 2.

9. A method for producing a solid electrolyte, the method comprising the steps of:

preparing a composition containing lithium, phosphorus, sulfur, aluminum, nitrogen, bromine, and iodine as constituent elements; and
treating the composition,
wherein the solid electrolyte satisfies conditions (a), (b), or (c) below when a molar ratio of the lithium to the phosphorus is represented by $r_1$, a molar ratio of a sum of the bromine and the iodine to the phosphorus is represented by $r_2$, and a molar ratio of a sum of the bromine and the iodine to the nitrogen is represented by $r_3$:

$$\text{(a) } 3.00 \leq r_1 - r_2 \leq 3.60 \text{ and } 1.5 \leq r_3 \leq 100;$$

$$\text{(b) } 2.80 \leq r_1 - r_2 < 3.00 \text{ and } 2.0 \leq r_3 \leq 100;$$

or

$$\text{(c) } 2.60 \leq r_1 - r_2 < 2.80 \text{ and } 2.5 \leq r_3 \leq 100.$$

Fig. 1

Fig. 2

## INTERNATIONAL SEARCH REPORT

International application No.

**PCT/JP2023/015430**

### A. CLASSIFICATION OF SUBJECT MATTER

***H01B 1/10***(2006.01)i; ***H01B 1/06***(2006.01)i; ***H01M 10/052***(2010.01)i; ***H01M 10/0562***(2010.01)i
FI:  H01B1/10; H01M10/052; H01B1/06 A; H01M10/0562

According to International Patent Classification (IPC) or to both national classification and IPC

### B. FIELDS SEARCHED

Minimum documentation searched (classification system followed by classification symbols)

H01B1/10; H01B1/06; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/172159 A1 (GS YUASA INTERNATIONAL LTD.) 02 September 2021 (2021-09-02)<br>paragraphs [0138], [0146] | 1-9 |
| A | WO 2021/117383 A1 (GS YUASA INTERNATIONAL LTD.) 17 June 2021 (2021-06-17)<br>paragraph [0100] | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 June 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/015430**

| Patent document cited in search report | | | Publication date (day/month/year) | Patent family member(s) | | | Publication date (day/month/year) |
|---|---|---|---|---|---|---|---|
| WO | 2021/172159 | A1 | 02 September 2021 | US | 2023/0006244 | A1 | |
| | | | | paragraphs [0171]-[0177], [0191] | | | |
| | | | | CN | 115485897 | A | |
| WO | 2021/117383 | A1 | 17 June 2021 | US | 2022/0416293 | A1 | |
| | | | | paragraph [0112] | | | |
| | | | | CN | 115152068 | A | |

Form PCT/ISA/210 (patent family annex) (January 2015)

**EP 4 492 405 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020045634 A